# EUROPÄISCHE PATENTSCHRIFT

(11) **EP 0 464 185 B1**
(45) Veröffentlichungstag und Bekanntmachung des Hinweises auf die Patenterteilung: **27.07.1994**
(21) Anmeldenummer: 91903266.4
(22) Anmeldetag: 21.01.1991
(51) Int. Cl.: B65D 77/20

(54) **FLANSCHBEHÄLTER MIT HEISSGESIEGELTEM DECKEL**
FLANGED CONTAINER WITH HEAT-SEALED LID
RECIPIENT A COLLERETTE A COUVERCLE THERMOSOUDE

(30) Priorität: 19.01.1990 AT 110/90
(43) Veröffentlichungstag der Anmeldung: 08.01.1992
(73) Patentinhaber: TEICH AKTIENGESELLSCHAFT, 3200 Obergrafendorf (AT)
(72) Erfinder: KREUTZER, Erich, A-3100 St. Pölten (AT)
(74) Vertreter: Stampfer, Heinz
(86) Internationale Anmeldenummer: AT9100012
(87) Internationale Veröffentlichungsnummer: WO9110605

(56) Entgegenhaltungen:
- CH-A- 428 184
- DE-A- 2 826 424
- DE-B- 1 183 857

## Beschreibung

Die Erfindung betrifft eine Packung mit einer Packungshülle, die einen Behälter aufweist, dessen Öffnung von einem rahmen- oder ringförmigen, flanschartig ausgebildeten Randbereich eingefaßt ist, sowie ein zumindest im wesentlichen aus demselben Material wie der Behälter bestehendes Deckelelement, das mit dem flanschartigen Behälter-Randbereich durch Heißsiegelung gegebenenfalls gas- und flüssigkeitsdicht verbunden ist.

Eine Packung dieser Art ist aus der DE-A-1 183 857 bekannt. Die Packung in Form eines Behälters aus schweißbarem Kunststoff besteht aus einem Becher, dessen flanschartiger Randbereich eine längs dem größten Teil seines Umfanges umlaufende, linienförmige Materialverschwächung in Form von zwei Kerben an der Ober- bzw. Unterseite des Flansches aufweist. Nach Einbringen des Füllgutes in den Becher wird eine Kunststoffolie auf den flanschartigen Becherrand außerhalb der Materialverschwächung angeschweißt. Zum Öffnen wird die Kunststoffolie mit dem mit ihr verschweißten ringförmigen äußeren Rand des flanschartigen Randbereichs unter Einreißen der Materialverschwächung zum größten Teil abgetrennt. Die dabei insbesondere zur Einleitung des Einreißens erforderlichen Manipulationskräfte sind aber nicht unbeträchtlich; sie können nur bei Behältern mit relativ großer Wandstärke ohne Deformation des Bechers übertragen werden.

Hier will die Erfindung Abhilfe schaffen. Die Erfindung, wie sie in den Ansprüchen gekennzeichnet ist, löst die Aufgabe, eine Packung der eingangs genannten Art zu schaffen, die beim Öffnen einen relativ geringen Kraftaufwand benötigt, wobei Behälter und Deckelelement auch nach dem öffnen miteinander verbunden bleiben und als Leermaterial gemeinsam entsorgt werden können.

Die Erfindung wird nachstehend anhand der Figuren, die einige vorteilhafte Ausführungswege illustrieren, eingehend erläutert.

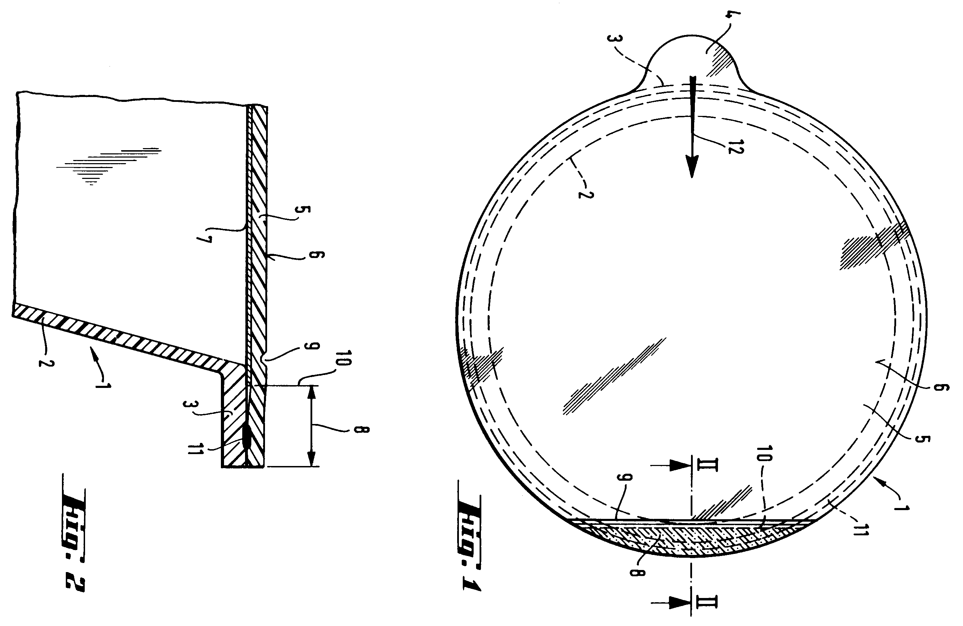

Es Zeigen Fig. 1 in der Aufsicht und Fig.2 in einem Teilschnitt längs der Linie II-II in Fig. 1 einen Becher 1 aus Polystyrol in der üblichen Form mit einer kegelstumpfförmigen Becherwand 2, an deren oberen Rand ein ringförmiger, flanschartig ausgebildeter Randbereich 3 angeordnet ist.

Zum Verschließen des Bechers dient als Deckelelement eine mit einer Grifflasche 4 versehene Verschlußplatine 5 aus orientiertem Polystryol (OPS) einer Stärke im Bereich von 0,02 - 0,5 mm, die an ihrer Oberseite 6 mit einer Beschriftung und/oder dekorativ bedruckt ist und an ihrer Unterseite mit einer Heißsiegellackierung 7, z.B. auf Basis von thermoplastischen Acrylharzen oder Polypropylen-Dispersionen mit einer Auftragsmenge von etwa 4 bis 10 g/m² versehen ist, wobei der in Fig. 1 mit Schraffur versehene Bereich 8 von der Heißsiegellackierung 7 ausgenommen ist. Die Verschlußplatine 5 weist ferner an ihrer Oberseite eine linienförmige Einkerbung 9 auf, die sich außerhalb des Bereichs 8 in geringem Abstand von dessen Rand 10 erstreckt.

Nach Füllung des Bechers mit dem Packgut, z.B. mit Joghurt, wird die Verschlußplatine 5 innerhalb einer ringförmigen, etwa 1,0 - 3,0 mm breiten Zone 11 mit dem flanschartigen Randbereich 3 des Bechers 1 durch Heißsiegelung verbunden. Dabei entsteht innerhalb des durch die Schraffur angedeuteten Bereichs 8 eine unlösbare Verschweißung zwischen dem Polystryol des Bechermaterials und dem der Verschlußplatine, während sich innerhalb des restlichen Verschlußplatinen-Randes, infolge der aufgebrachten Heißsiegellackierung 7, eine durch Abschälen lösbare Siegelverbindung ausbildet.

Zum Öffnen des Bechers 1 wird die Verschlußplatine 5 wie üblich an der Grifflasche 4 angefaßt und in Richtung des Pfeiles 12 unter Aufschälung der Siegelverbindung bis zum Rand 10 abgezogen und die Verschlußplatine 5 längs der linienförmigen Einkerbung 9, die wie ein Folienscharnier wirkt, nach oben abgeknickt, wodurch das Packgut leichter zugänglich wird. Nach Entnahme des Packgutes kann der Becher 1 gemeinsam mit der mit ihm bleibend verbundenen Verschlußplatine 5 selektiv entsorgt und gegebenenfalls als Material wiederverwendet werden.

Die Packung in der Art, wie sie vorstehend anhand der Figuren 1 und 2 beschrieben wurde, kann auch vorteilhaft aus Aluminium bestehen. Dazu wird z.B. ein Behälter eingesetzt, der eine geringere Tiefe als der Joghurt-Becher gemäß Fig. 1 und 2 hat. Dieser Behälter wird z.B. aus einem 0,120 mm dicken Aluminiumband, das einseitig mit einer Heißsiegellackierung auf Acrylatbasis versehen ist, durch Tiefziehen hergestellt, wobei die Heißsiegellackierung an der Oberseite des flanschartigen Behälter-Randbereiches zu liegen kommt. Die Verschlußplatine besteht aus einer 0,030 mm starken Aluminiumfolie, welche an ihrer Unterseite in jenem Behälter-Randbereich, in welchem beim Ansiegeln der Platine eine unlösbare Verbindung hergestellt werden soll, eine Heißsiegellackierung wie am Behälter aufweist, und im Bereich, in dem dann die lösbare Verbindung realisiert werden soll, mit einer peelfähigen Acrylat-Heißsiegellackierung versehen ist. Das Befüllen erfolgt analog wie anhand der Figuren 1 und 2 beschrieben. Beim öffnen wird die Verschlußplatine in den Bereich der lösbaren Siegelverbindung vom Behälterrand abgeschält und an der Grenze zur lösbaren Siegelverbindung abgeknickt. Wegen der geringen Rückstellkräfte des verformten Aluminiums ist in der Aluminium-Verschlußplatine ein Folienscharnier nicht erforderlich.

Die Erfindung ist aber nicht auf Packungen beschränkt, bei der als Deckelelement eine ebene Verschlußplatine zum Einsatz gelangt. Gemäß zwei nachstehend beschriebenen weiteren Ausführungswegen der Erfindung kann diese auch an Packungen mit Stülpdeckel realisiert werden.

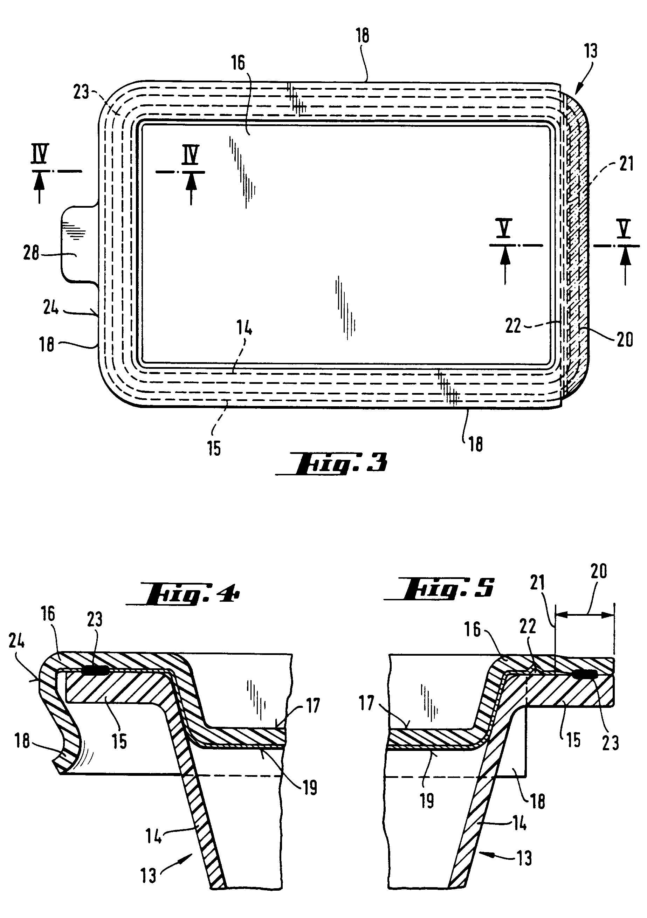

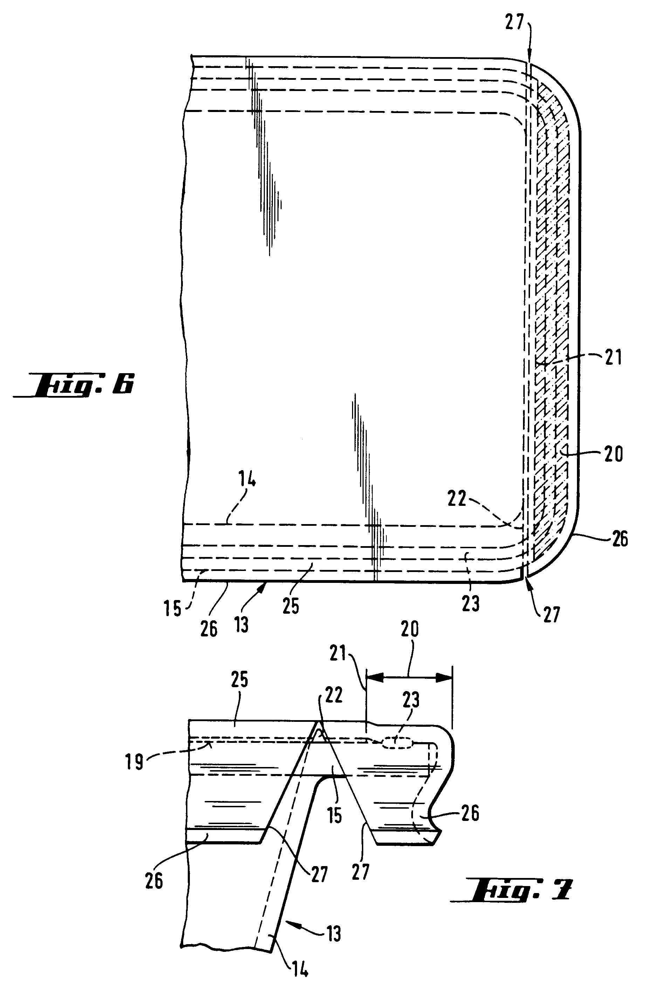

Fig. 3 zeigt in der Aufsicht einen trogförmigen, mit einem Stülpdeckel versehenen Behälter 13 und die Figuren 4 und 5 Teilschnitte längs den Linien IV-IV bzw. V-V in Fig. 3. Der Behälter 13 weist analog wie der anhand der Figuren 1 und 2 beschriebene Becher an dem oberen Rand der sich nach oben erweiternden Behälterwand 14 (siehe die Figuren 4 und 5) einen rahmenförmigen, flanschartig ausgebildeten Randbereich 15 auf. Zum Verschluß dieses Behälters 13 dient ein Stülpdeckel 16 mit einer versteifenden Vertiefung 17 und mit einem über dem Randbereich 15 nach unten gezogenen Stülprand 18, der bei dieser Ausführung der Packung nur drei Seiten des Randbereiches 15 einnimmt, wobei an der schmäleren Seite 24 in Fortsetzung des Stülprandes 18 eine Grifflasche 28 vorgesehen ist. Behälter 13 und Stülpdeckel 16 bestehen hier z.B. aus Polyproplyen.Auf der Unterseite des Stülpdeckels 16 ist eine Schicht 19 eines Hotmelts auf Basis von Kohlenwasserstoffwachsen und Äthylenvinylacetat mit einem Auftrag von ca. 5 - 20g/m² aufgebracht, wobei der durch die Schraffur angedeutete Bereich 20 von dieser Hotmeltschicht 19 Frei bleibt. Parallel zum Rand 21 des Bereiches 20 aber außerhalb von diesem ist an der Unterseite des Deckels eine linienförmige Einkerbung 22 vorgesehen.

Nach Füllen des Behälters 13 mit dem Packgut wird der Stülpdeckel 16 aufgesetzt und, analog wie anhand der Figuren 1 und 2 beschrieben, längs einer schmalen Zone 23 mit dem rahmenförmigen, flanschartigen Randbereich 15 des Behälters 13 durch Heißsiegelung verbunden. Beim Heißsiegelvorgang wird das Hotmelt der Schicht 19 in der Zone 23 verflüssigt und diffundiert zum größten Teil in das sich erweichende Polypropylen-Material des Behälters 13 und des Stülpdeckels 16 ein, wodurch hier eine durch Abschälen lösbare Siegelverbindung erzeugt wird, während sich im Bereich 20 eine unlösbare Siegelverbindung bildet. Die Festigkeit der lösbaren Siegelverbindung kann z.B. durch Variation der Dicke der Hotmelt-Schicht 19 eingestellt werden.

Zum Öffnen der Packung wird der Stülpdeckel 16 an der Grifflasche 28 angefaßt und von der Seite 24 beginnend abgehoben. Dabei wird der lösbare Bereich der Siegelverbindung aufgetrennt und schließlich an der linienförmigen Einkerbung 22, die als Folienscharnier wirkt, nach oben geklappt. Nach einer Teilentnahme des Packgutes kann der Stülpdeckel 16 wieder zugeklappt und die Packung so wiederverschlossen werden.

Eine Packung, die eine Variante der anhand der Figuren 3 bis 5 erläuterten Packung darstellt, ist anhand der Figuren 6 und 7 beschrieben, die jeweils in Teildarstellungen die Packung in der Aufsicht bzw. in einem Aufrißdetail zeigen. Diese Packung unterscheidet sich von der Packung nach Fig. 3 im wesentlichen dadurch, daß der Stülpdeckel 25 nun keine versteifende Vertiefung aufweist und im wesentlichen, über seinen ganzen Umfang mit einem über dem Randbereich 15 des Behälters nach unten gezogenen Stülprand 26 aufweist, der nun aber an den Enden der linienförmigen Einkerbung 22 durch zwei Ausschnitte 23 unterbrochen ist, wodurch der Stülpdeckel 25 während des Öffnungsvorganges längs der Einkerbung abgeknickt werden kann. Der Stülpdeckel 25, der ja an allen vier Seiten einen heruntergezogenen Stülprand aufweist, hat gegenüber dem Stülpdeckel 16 gemäß der Variante nach Fig. 3 den Vorteil, daß er sich beim erstmaligen Verschließen der Packung einfacher aufsetzen läßt.

Zur Realisierung der Folienscharniere und gemäß den vorstehend beschriebenen Beispielen werden an der Ober- bzw. Unterseite des Deckelelementes linienförmige Einkerbungen (9, 21) angebracht. Bei einem etwas stärkeren Deckelmaterial kann es aber zweckmäßig sein, das Folienscharnier in Form von zwei von der Ober- und der Unterseite ausgehenden übereinanderliegenden linienförmigen Einkerbungen oder Vertiefungen auszubilden.

Soweit die Folienscharniere an der Unterseite des Deckelelementes angebrachte Einkerbungen aufweisen, wird, um die Dichtigkeit der Packung an den Stellen der rahmen- oder ringförmigen Heißsiegelungs-Zone (11, 23) zu erreichen, die Einkerbung beim Heißsiegeln flach gequetscht. Ist das nicht möglich, kann man eine Dichtigkeit auch dadurch gewährleisten, daß sich die Materialverschwächung nicht bis zum Innenrand der rahmen- oder ringförmigen Heißsiegelungs-Zone erstreckt.

Die erfindungsgemäße Packung ist als Einwegpackung vorzugsweise zur Aufnahme von halbfestem oder flüssigen Packungsgut, insbesondere von Nahrungsmitteln oder Getränken geeignet. Die ganze Packungshülle kann selektiv entsorgt und als Material wiederverwendet werden.

## Patentansprüche

1. Packung mit einer Packungshülle, die einen Behälter aufweist. dessen Öffnung von einem rahmen- oder ringförmigen, flanschartig ausgebildeten Randbereich eingefaßt ist, sowie ein zumindest im wesentlichen aus demselben Material wie der Behälter bestehendes Deckelelement, das mit dem flanschartigen Behälter-Randbereich durch Heißsiegelung gegebenenfalls gas- und flüssigkeitsdicht verbunden ist, dadurch gekennzeichnet, daß durch die in einer rahmen- oder ringförmigen Zone (11, 23) erfolgte Heißsiegelung der Behälter-Randbereich (3, 15) mit dem Deckelelement innerhalb eines Bereiches (8) am Randbereich-Umfang durch Abschälen unlösbar, sonst aber durch Abschälen lösbar miteinander verbunden ist.

2. Packung nach Anspruch 1, dadurch gekennzeichnet, daß im Deckelelement (5, 16, 25) an oder nahe der Trennungslinie (10, 21) zwischen dem Bereich (8, 20) der unlösbaren Heißsiegelverbindung und dem mit dem Behälter-Randbereich (3, 16, 25) lösbar verbundenen, restlichen Bereich des Deckelementes (5, 16, 25) ein Folienscharnier vorgesehen ist.

3. Packung nach Anspruch 2, dadurch gekennzeichnet, daß das Folienscharnier durch eine Materialverschwächung im Deckelelement wie eine Einkerbung (9, 22) gebildet ist.

4. Packung nach Anspruch 3, dadurch gekennzeichnet, daß sich die Materialverschwächung nicht bis zum Innenrand der rahmen- oder ringförmigen Heißsiegelungs-Zone (11, 23) erstreckt.

5. Packung nach einem der Ansprüche 1 bis 4, dadurch gekennzeichnet, daß Behälter (1) und Deckelelement (5) im wesentlichen aus Polystyrol bestehen.

## Claims

1. A package with a packaging envelope which has a container, the opening of which is bordered by a frame-shaped or annular, flange-like edge region, and also a cover element made at least substantially of the same material as the container, which element is connected to the flange-like container edge region by hot-sealing so as to be optionally gas-tight and liquid-tight, characterized in that the hot-sealing which has taken place in a frame-shaped or annular zone (11, 23) causes the container edge region (3, 15) to become joined to the cover element within a region (8) on the periphery of the edge region so that they are undetachable by peeling-off, but otherwise are joined together so that they are detachable by peeling-off.

2. A package according to Claim 1, characterized in that a film hinge is provided in the cover element (5, 16, 25) on or close to the separating line (10, 21) between the region (8, 20) of the undetachable hot-sealing join and the remaining region of the cover element (5, 16, 25) which is joined detachably to the edge region (3, 16, 25) of the container.

3. A package according to Claim 2, characterised in that the film hinge is formed by a weakening of material in the cover element, such as a notch (9, 22).

4. A package according to Claim 3, characterised in that the weakening of material does not extend as far as the inner edge of the frame-shaped or annular hot-sealing zone (11, 23).

5. A package according to one of Claims 1 to 4, characterised in that the container (1) and cover element (5) are made substantially of polystyrene.

## Revendications

1. Emballage muni d'une enveloppe d'emballage qui comporte un récipient dont l'embouchure est entourée par une zone de bordure constituant une sorte de flasque en forme de cadre ou d'anneau, ainsi qu'un couvercle constitué au moins pour l'essentiel du même matériau que le récipient et qui est relié à la zone de bordure du récipient formant flasque par un scellement à chaud, le cas échéant étanche aux gaz et aux liquides, caractérisé en ce que, grâce au scellement à chaud réalisé dans une région en forme de cadre ou d'anneau (11, 23), la zone de bordure du récipient (3, 15) est reliée au couvercle, à l'intérieur d'une zone (8) du pourtour de la zone de bordure de façon non séparable par pelage, tandis qu'hors de cette zone, elle est reliée de façon séparable par pelage.

2. Emballage selon la revendication 1, caractérisé en ce qu'une charnière flexible (à feuille ou alarme) est prévue dans le couvercle (5, 16, 25) sur, ou à proximité de la ligne de séparation (10, 21) entre la zone (8, 20) de la liaison par scellement à chaud non séparable et la zone restante du couvercle reliée (5, 16, 25) de façon séparable à la zone de bordure (3, 16, 25) du récipient.

3. Emballage selon la revendication 2, caractérisé en ce que la charnière flexible est constituée par un affaiblissement de la matière du couvercle, tel qu'une entaille (9, 22).

4. Emballage selon la revendication 3, caractérisé en ce que l'affaiblissement de la matière ne s'étend pas jusqu'au bord intérieur de la zone de scellement à chaud (11, 23) en forme de cadre ou d'anneau.

5. Emballage selon l'une des revendications 1 à 4, caractérisé en ce que le récipient (1) et le couvercle (5) sont réalisés pour l'essentiel en polystyrol.
